# FASCICULE DE BREVET EUROPEEN

(11) **EP 1 675 523 B1**
(45) Date de publication et mention de la délivrance du brevet: **28.05.2008**
(21) Numéro de dépôt: 05707458.5
(22) Date de dépôt: 17.02.2005
(51) Int. Cl.: A61C 1/14, A61B 17/16, B23B 31/20

(54) **PIECE A MAIN A USAGE DENTAIRE OU CHIRURGICAL AVEC MECANISME DE SERRAGE**
HANDSTÜCK FÜR ZAHNMEDIZINISCHE ODER CHIRURGISCHE VERWENDUNG MIT ARRETIERMECHANISMUS
HANDPIECE FOR DENTAL OR SURGICAL USE WITH LOCKING MECHANISM

(30) Priorité: 17.02.2004 EP 04003520
(43) Date de publication de la demande: 05.07.2006
(73) Titulaire: Bien-Air Holding SA, 2500 Bienne 6 (CH)
(72) Inventeur: MAITRE, Luc, CH-2885 Epauvillers (CH)
(74) Mandataire: Thérond, Gérard Raymond
(86) Numéro de dépôt international: PCT/EP2005/001612
(87) Numéro de publication internationale: WO 2005/089666

(56) Documents cités:
- DE-A- 4 103 663
- GB-A- 587 871
- US-A- 3 488 850
- US-A- 3 631 597
- US-A- 4 260 381

## Description

La présente invention concerne une pièce à main à usage dentaire ou chirurgical, du genre comportant : un arbre creux rotatif autour d'un axe longitudinal et monté par des roulements dans un fourreau tubulaire fixe; une pince montée dans une extrémité avant de l'arbre creux et ayant un canal central destiné à recevoir la queue d'un outil amovible, la pince comportant des branches axiales réparties autour de l'axe et pourvues chacune d'un mors dans le canal central; un mécanisme de serrage porté par l'arbre creux et agencé pour exercer une force centripète sur une surface d'appui de chaque branche de la pince pour serrer la queue de l'outil entre les mors de la pince; et un mécanisme de desserrage porté au moins en partie par le fourreau fixe et agencé pour agir sur le mécanisme de serrage au moins de façon à relâcher la pince.

Dans les pièces à main habituelles, telles que celle décrite dans la demande de brevet FR 2 191 869 correspondant au brevet US 3 902 248, les mors sont situés à une extrémité de la pince qui présente des surfaces extérieures d'appui de forme conique, lesquelles s'engagent dans un cône intérieur d'une pièce tubulaire qui serre ainsi l'extrémité de la pince sur la queue de l'outil. Par exemple, la pince est montée de manière coulissante dans l'arbre creux, ses mors et ses surfaces extérieures d'appui se trouvent à son extrémité avant pour coopérer avec l'orifice avant de l'arbre, et la pince est maintenue serrée par un ressort de serrage qui la tire axialement vers l'arrière. Le mécanisme de desserrage comporte un manchon extérieur qui est relié au corps de l'instrument par un système à vis et qui sert d'organe de commande. Lorsque l'utilisateur fait pivoter ce manchon, celui-ci avance en entraînant une douille intérieure qui va comprimer le ressort de serrage et faire avancer la pince pour la dégager du cône qui la serrait.

Dans les cas où l'outil porté par la pièce à main doit supporter des efforts relativement élevés, notamment en ce qui concerne le couple et les forces axiales, le serrage de la pince doit être assez fort. Cela signifie une force axiale assez élevée du ressort de serrage, ainsi que des forces de frottement élevées sur les surfaces coniques qui transforment cette force axiale en forces radiales de serrage. Le mécanisme de desserrage doit pouvoir surmonter ces forces en appliquant une poussée axiale suffisante à l'organe coulissant sollicité par le ressort de serrage. Cette poussée axiale est alors transmise au bâti de la pièce à main à travers au moins l'un des roulements supportant l'arbre rotatif. La plupart du temps, comme dans la construction selon la publication FR 2 191 869, cette poussée s'exerce vers l'avant et charge donc les roulements dans le sens opposé aux charges axiales que l'outil subira en service, c'est-à-dire que les roulements doivent être conçus pour supporter des charges axiales dans les deux sens.

En outre, un ressort de serrage relativement fort a une masse relativement élevée, ce qui constitue un inconvénient notable pour une pièce qui tourne très vite et dont le centrage ne peut généralement pas être assuré avec précision. Les vibrations qui en résultent augmentent avec la masse de ce ressort.

Dans la pièce à main décrite dans le brevet US 3 631 597, la pince et son dispositif de serrage à ressort sont du même genre que ci-dessus, avec les mêmes inconvénients. Pour surmonter la force du ressort de serrage, il est prévu un mécanisme de desserrage comportant des billes engagées à la fois dans des fentes hélicoïdales d'un tube fixe et dans des rainures longitudinales d'un manchon pivotant qui sert de commande manuelle.

Une pièce à main dépourvue de ressort de serrage est décrite dans le brevet US3488850. La pince a des surfaces extérieures coniques, coopérant avec des pièces annulaires qui produisent son serrage, et elle est montée dans l'arbre creux avec un jeu longitudinal. L'extrémité avant de la pince n'est pas supportée par cet arbre, mais par un palier avant fixé dans un nez mobile axialement pour servir d'organe manuel de commande. Pour cela, le nez est monté par un filetage sur le corps de la pièce à main, de sorte que l'opérateur peut le faire tourner pour faire reculer ou avancer le palier avant afin de serrer ou desserrer la pince. Un gros inconvénient de ce système est d'imposer une forte charge axiale sur les paliers tant que la pince est serrée, donc pendant le travail. De plus, le mode de support du palier avant n'est pas assez rigide pour empêcher des vibrations de l'outil dès que la vitesse devient grande.

### Résumé de l'invention

La présente invention vise à éviter les inconvénients susmentionnés de l'art antérieur, grâce à un agencement qui assure un fort serrage au niveau des mors de la pince tout en limitant les forces axiales intervenant dans les mécanismes de serrage et de desserrage. En particulier, les mécanismes de serrage et de desserrage devraient être agencés de façon à faciliter les manoeuvres de la pince et éviter des manipulations involontaires. Un but additionnel de l'invention est de simplifier l'agencement des roulements des paliers de la pièce à main, en particulier en réduisant les charges axiales sur au moins l'un d'eux.

Selon un premier aspect de l'invention, il est prévu une pièce à main selon la revendication 1 annexée au présent brevet.

Avec cette combinaison de caractéristiques, on peut obtenir un serrage assez fort de la pince sans que de grandes forces axiales apparaissent dans la partie rotative de la pièce à main, et en outre les dispositifs de serrage et de desserrage peuvent être allégés grâce à cette réduction des efforts. Selon un mode de réalisation préféré, la fente hélicoïdale du mécanisme de desserrage peut alors comporter latéralement, près de son extrémité où se trouve la bille dans la position inactive du mécanisme de desserrage, une languette flexible qui retient la bille par encliquetage dans cette position, afin d'éviter un desserrage involontaire.

Le manchon coulissant peut être sollicité dans le sens du serrage par un ressort relativement faible. Dans une variante particulièrement avantageuse, on peut ménager dans la surface de came un creux formant un cran qui maintient en place le manchon coulissant par l'élasticité des branches de la pince, ce qui permet de supprimer le ressort de serrage habituel. En conséquence, la manoeuvre de desserrage n'a plus à surmonter la poussée axiale due à ce ressort.

Selon un mode de réalisation préféré, chaque branche de la pince est formée par un levier dont une première extrémité est rattachée à la partie annulaire par une articulation et dont ladite surface d'appui est distante axialement de cette articulation, le mors étant situé plus près de l'articulation que de la surface d'appui. Il en résulte que lesdites forces centripètes à exercer par le mécanisme de serrage peuvent être réduites, puisqu'elles sont multipliées par les leviers de la pince pour exercer un fort serrage sur l'outil. Les revendications dépendantes 2 à 12 décrivent des modes de réalisations préférés de l'invention.

D'autres caractéristiques et avantages de la présente invention apparaîtront dans la description suivante de différents modes de réalisation, présentés à titre d'exemples non limitatifs en référence aux dessins annexés.

### Description sommaire des dessins

La figure 1 est une vue schématique en perspective d'une pièce à main selon l'invention.

La figure 2, divisée en deux fractions 2a et 2b, est une vue en coupe longitudinale d'un premier mode de réalisation de la pièce à main de la figure 1, comportant une pince associée à un mécanisme de serrage à billes.

Les figures 3 à 5 représentent la pince visible dans la figure 2, respectivement en perspective, en coupe longitudinale et en vue latérale.

La figure 6 est une vue partielle en perspective d'un dispositif de commande de serrage et desserrage de la pince.

La figure 7 est une vue de l'accouplement entre les deux arbres de la pièce à main.

La figure 8 représente une pièce intercalaire de l'accouplement.

La figure 9 est une vue de détail en coupe longitudinale représentant un deuxième mode de réalisation, grâce à une modification du mécanisme de serrage à billes visible dans la figure 2a.

### Description détaillée de modes de réalisation de l'invention

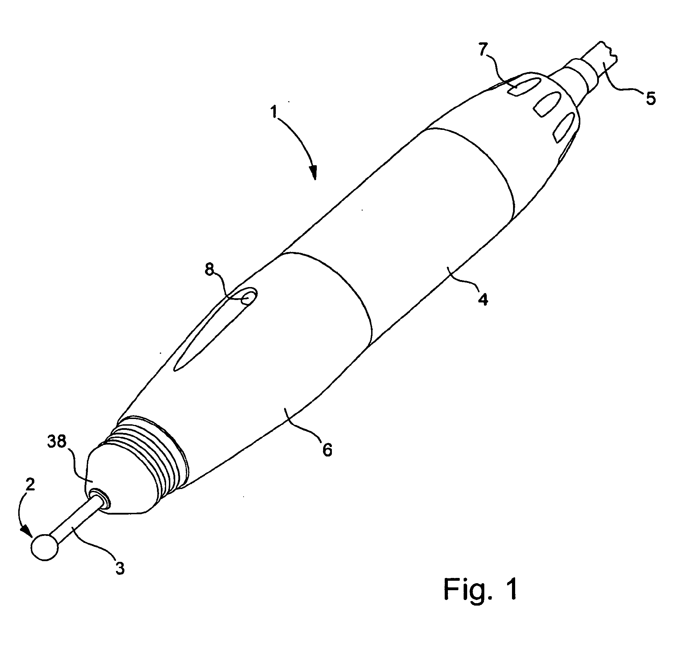

La figure 1 représente une pièce à main 1 à usage dentaire ou chirurgical, dans laquelle on peut trouver les divers modes de réalisation de l'invention qui seront décrits plus loin. La pièce à main est équipée d'un outil rotatif amovible 2 ayant une queue cylindrique 3 qui est fixée par serrage dans une pince rotative de la pièce à main 1. Celle-ci contient un moteur, en l'occurrence un moteur électrique, pour faire tourner l'outil 2 à grande vitesse. Le moteur est logé dans le corps principal 4 de la pièce à main et il est alimenté et commandé à partir d'une unité extérieure via un câble électrique 5 raccordé à l'arrière de la pièce à main. L'opérateur commande le serrage et le desserrage de la pince en faisant tourner dans un sens ou dans l'autre un manchon 6 monté de manière rotative sur le corps 4. Les références 7 et 8 désignent des ouies de ventilation. Un tel instrument trouve ses applications notamment dans les cabinets dentaires, dans les laboratoires dentaires et dans les techniques de microchirurgie. Dans les exemples représentés ici, il s'agit d'un instrument pour laboratoire dentaire, utilisant des outils dont la queue a un diamètre normalisé de 2,35 mm.

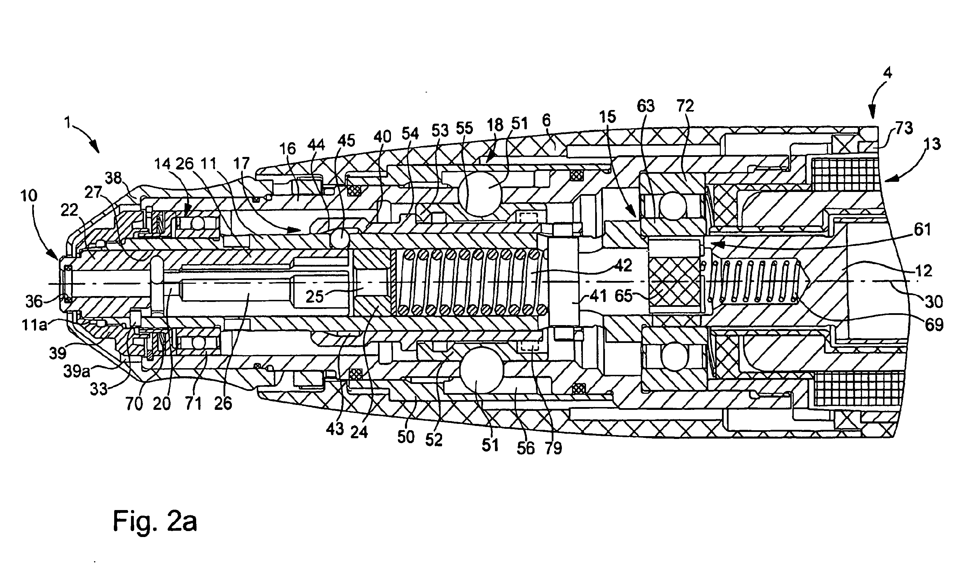

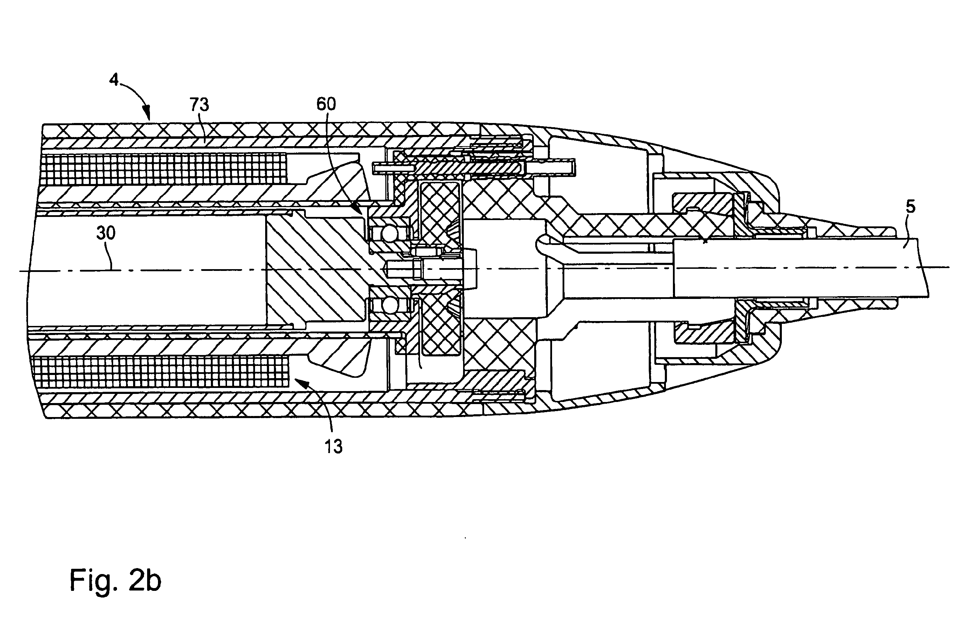

On décrira maintenant, en référence aux figures 2 à 5, un premier mode de réalisation de la pince de serrage 10 de l'outil et des mécanismes de serrage et de desserrage de cette pince. La pince 10 est située dans l'extrémité avant de la pièce à main, à l'intérieur d'un arbre rotatif creux 11 couplé à l'arbre 12 du moteur électrique 13. L'arbre 11 est supporté par des roulements à billes 14 et 15 dans un fourreau 16 fixé au corps 4 de la pièce à main et il peut ainsi tourner à des vitesses de l'ordre de 50 000 tours/minute dans l'instrument représenté ici. Cependant, une pince de serrage telle que la pince 10 est aussi utilisable dans des instruments dont l'outil peut tourner à plusieurs centaines de milliers de tours par minute, notamment avec un entraînement par turbine à air.

Un mécanisme 17 de serrage de la pince 10 est monté sur l'arbre 11 et tourne avec lui. Un mécanisme 18 de desserrage de la pince, commandé par la rotation du manchon 6, est monté sur le fourreau non rotatif 16 et peut agir sur le mécanisme de serrage 17 afin de libérer l'outil lorsque la rotation est arrêtée. Ces mécanismes seront décrits en détail plus loin.

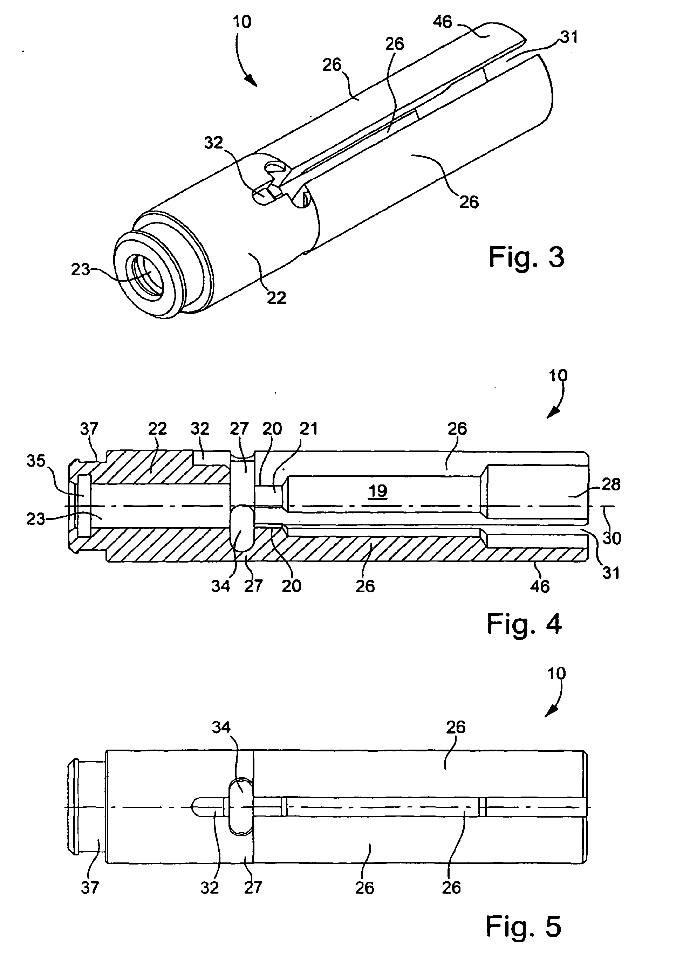

Les figures 3 à 5 montrent plus particulièrement le premier mode de réalisation de la pince 10, qui comporte ici trois mors 20 régulièrement répartis autour d'un canal central 19 de la pince, recevant la queue 3 de l'outil. Chaque mors 20 a une portion de surface cylindrique 21 destinée à s'appliquer contre la queue de l'outil.

A l'avant, la pince 10 comporte un canon d'entrée 22 sensiblement cylindrique, pourvu d'un alésage axial 23 calibré avec une grande précision afin de centrer l'outil aussi parfaitement que possible. On notera dans la figure 2 qu'un canon arrière de guidage 24 est fixé dans l'arbre 11 en arrière de la pince 10 et comporte un alésage central 25 destiné à guider l'extrémité de la queue de l'outil.

Chaque mors 20 fait partie intégrante d'un levier respectif 26 qui s'étend axialement vers l'arrière à partir du canon d'entrée 22, auquel il est rattaché par une partie flexible 27 formant en quelque sorte une articulation sur laquelle le levier 26 peut pivoter en direction de l'axe de rotation 30 de l'arbre. Sur chaque levier 26, le mors 20 se trouve beaucoup plus près de la partie flexible 27 que de l'extrémité libre 28 du levier, de sorte qu'une force radiale appliquée sur le levier près de son extrémité 28 produit une force de serrage très élevée au niveau du mors 20.

La pince 10 représentée dans les dessins est faite de préférence d'une seule pièce métallique, par exemple en acier. Les leviers 26 sont séparés les uns des autres par des fentes axiales 31 se prolongeant chacune par une encoche 32 dans l'arrière du canon 22. Dans chaque encoche 32 s'engage une goupille 33 qui solidarise en rotation la pince 10 et l'arbre creux 11. Des fentes transversales 34 réduisent l'épaisseur des leviers 26 à leur base et définissent ainsi les parties flexibles 27 dans trois régions périphériques de la section transversale de la pince. A l'avant du canon d'entrée 22, il est prévu une rainure annulaire intérieure 35 pour un joint torique 36 et une rainure annulaire extérieure 37 pour des lèvres d'un capuchon fixe 38 et d'un écrou 39 vissé sur l'arbre 11 pour retenir axialement la pince 10. L'écrou 39 est pourvu d'ailettes de ventilation 39a destinées à créer une légère pression d'air sous le capuchon 38 afin de prévenir l'entrée de saletés par la fente entre le capuchon et le canon 22. En outre, l'écrou 39 serre radialement l'extrémité 11 a de l'arbre creux 11 contre le canon 22, cette extrémité étant amincie et divisée en languettes flexibles par des fentes axiales. Ceci assure un centrage sans jeu de la pince 10 dans l'arbre creux.

Dans une variante non représentée ici, le canon d'entrée 22 peut être une pièce distincte, ne faisant pas partie de la pince 10. L'avant de celle-ci est alors formé d'une courte partie annulaire à laquelle les leviers 26 sont rattachés par une articulation. Cette partie annulaire peut être une pièce distincte des leviers, selon les besoins, mais une exécution en une pièce est préférable en général.

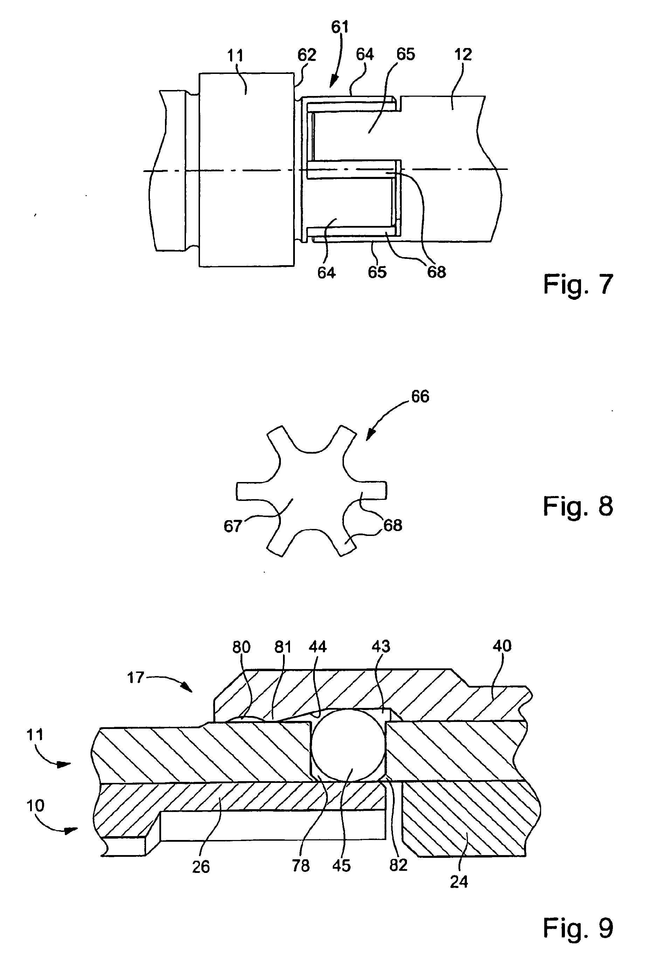

Le mécanisme de serrage 17 comporte un manchon 40 qui est monté de manière coulissante autour de l'arbre creux 11, avec lequel il est solidarisé en rotation par un barreau transversal 41 engagé dans des fentes longitudinales de l'arbre 11 et du manchon 40. Un ressort de compression 42, prenant appui par une rondelle sur le canon de guidage arrière 24, pousse le barreau 41 axialement vers l'arrière. L'extrémité avant du manchon 40 comporte une gorge intérieure 43 délimitée à l'avant par une surface conique 44. Trois billes 45 sont logées dans des trous correspondants 78 (voir figure 9) de l'arbre creux 11 et ont un diamètre qui correspond à la distance entre la surface intérieure de l'arbre 11 et le fond de la gorge 43 du manchon 40. Chaque bille 45 s'appuie sur la surface extérieure d'un des leviers 26 de la pince 10, près de l'extrémité 28 du levier.

Quand le manchon 40 est libéré du mécanisme de desserrage 18, il tend à coulisser vers l'arrière sous l'effet de la poussée axiale du ressort 42, de sorte que sa surface conique 44 pousse radialement vers l'intérieur l'extrémité de chaque levier 26 par l'intermédiaire de la bille correspondante 45. Par pivotement du levier sur la partie flexible 27, cette force se transmet d'une manière multipliée sur le mors 20 du levier et serre donc très fortement la queue de l'outil, et ceci de manière permanente pendant le travail. Les gens du métier comprendront qu'avec un tel mécanisme de serrage, les leviers 26 de la pince peuvent être soit rigides, soit légèrement flexibles. S'ils sont rigides, les déplacements radiaux de leurs extrémités sont simplement un peu plus petits, et il en va de même pour le déplacement axial du manchon 40. Dans les deux cas, une grande force de serrage au niveau des mors 20 est maintenue en permanence même si la force du ressort 42 est relativement modeste, grâce à l'effet de levier de la pince et aussi grâce à la faible inclinaison de la surface conique 44 par rapport à l'axe 30. Cette faible inclinaison a aussi pour effet que la force centrifuge agissant sur les leviers 26 ne peut pas surmonter l'effet du ressort 42. Il faut remarquer en outre que la transmission des efforts via les billes 45 s'effectue avec très peu de friction, ce qui contribue aussi à maintenir une force déterminée de serrage. Toutefois ces billes ne sont pas indispensables, car elles pourraient être remplacées par d'autres éléments de transmission traversant l'arbre 11 et capables de pousser les leviers 26 vers l'intérieur.

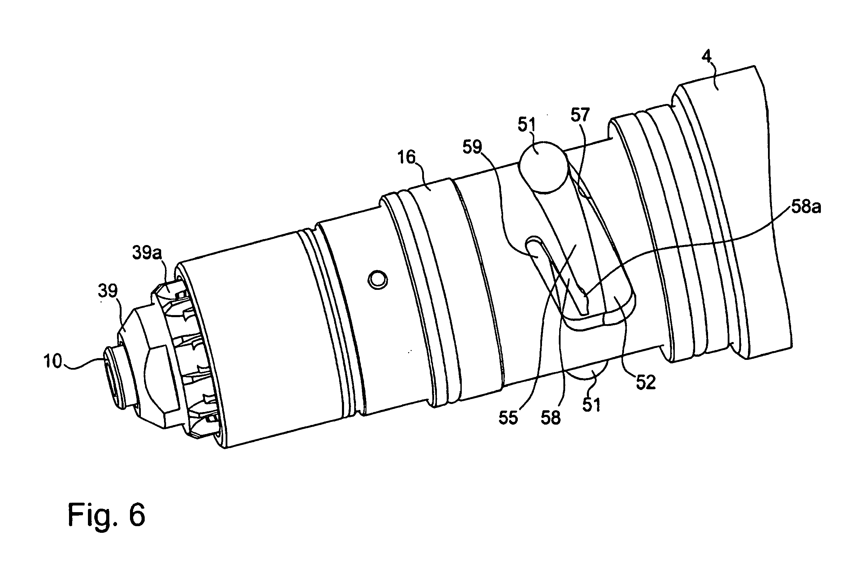

Le mécanisme de desserrage 18 est conçu pour repousser le manchon 40 vers l'avant, contre la force du ressort 42, lorsque l'utilisateur fait tourner le manchon de commande 6 sur le corps 4 dans le sens correspondant. Il comprend une douille 50 liée en rotation au manchon de commande 6, une ou plusieurs billes 51, en l'occurrence deux billes disposées symétriquement par rapport à l'axe 30 de la pièce à main, et une bague de poussée 52 montée de manière coulissante dans le fourreau 16 et ayant à l'avant un rebord intérieur 53 destiné à s'appuyer axialement contre un collet extérieur 54 du manchon 40 lorsque ce dernier ne tourne pas. Les billes 51 sont engagées dans une gorge extérieure annulaire 55 de la bague 52. En outre, chaque bille 51 est engagée dans une rainure axiale correspondante 56 de la douille 50 et dans une fente inclinée 57 (figure 6) du fourreau 16. Le tracé de chaque fente 57 est sensiblement hélicoïdal, pour déterminer un certain déplacement axial de la bille 51, et ses extrémités peuvent être légèrement coudées afin de mieux définir une position d'arrêt de la bille. Dans la forme préférée représentée à la figure 6, l'extrémité arrière de chaque fente 57, correspondant à la position reculée de la bague 52 et donc à un état de serrage de la pince 10, est équipée d'une languette flexible 58 dont l'extrémité a une bosse 58a qui réduit localement la largeur de la fente 57, afin de retenir par encliquetage la bille 51 au bout de la fente 57. Ceci a pour effet de retenir élastiquement le manchon de commande rotatif 6 afin de prévenir un actionnement intempestif et faire sentir à l'utilisateur qu'il va quitter la position normale de travail de la pince. On remarque que la languette flexible 58 est réalisée simplement par fraisage d'une fente supplémentaire 59 dans le fourreau 16. Cette fente est sensiblement parallèle à la fente 57, à laquelle elle se raccorde autour de l'extrémité de la languette 58.

Un aspect remarquable de la pièce à main, illustré notamment par la figure 2, est le fait que la partie tournante est supportée par trois paliers seulement, à savoir le roulement à billes avant 14, le roulement à billes central 15 et un roulement à billes arrière 60, les deux arbres coaxiaux 11 et 12 étant supportés tous les deux par le roulement central 15 à l'intérieur duquel ils sont liés en rotation l'un à l'autre par un accouplement positif 61 représenté plus particulièrement dans les figures 2, 7 et 8. L'extrémité arrière de l'arbre creux 11 présente un épaulement 62 qui bute contre la bague intérieure 63 du roulement 15. Elle présente en outre un groupe de crabots 64 qui est chassé dans la bague 63, en l'occurrence trois crabots répartis à 120 degrés les uns des autres sur la circonférence. De son côté, l'extrémité avant de l'arbre 12 du moteur est insérée dans la bague intérieure 63 du roulement 15, de préférence de manière à pouvoir y effectuer les petits déplacements axiaux pouvant résulter des dilatations thermiques, des jeux axiaux des roulements et d'autres tolérances. Cette extrémité de l'arbre 12 comporte également des crabots 65 s'étendant axialement entre les crabots 64 de l'autre arbre, pour assurer la transmission du couple dans les deux sens entre les deux arbres. Une pièce intercalaire 66, de préférence en matière synthétique, comporte un corps central cylindrique 67 et des ailettes radiales 68 qui sont intercalées entre les crabots adjacents 64 et 65 pour servir de coussinets. De plus, la pièce intercalaire 66 est précontrainte axialement contre l'arbre creux 11 par un ressort de compression 69 logé dans l'arbre 12 et dont le rôle apparaîtra plus loin.

Le roulement avant 14 est précontraint au moyen d'un ressort diaphragme 70 qui pousse vers l'arrière la bague extérieure 71 du roulement, capable de coulisser dans le fourreau 16. Cette précontrainte axiale se transmet à travers le roulement 14 et l'arbre 11 jusqu'à la région du roulement central 15, où elle se répartit d'une part sur la pièce intercalaire 66 et l'arbre 12 du moteur, dans une mesure égale à la poussée axiale du ressort 69, et pour le reste dans le roulement central 15 sous la forme d'une précontrainte qui retourne au fourreau 16 via la bague extérieure 72 du roulement. La force axiale que le ressort 69 exerce sur l'arbre 12 constitue évidemment la précontrainte axiale du roulement arrière 60. Grâce au jeu axial de l'accouplement 61 entre les deux arbres, cette charge ne varie pas lorsque l'utilisateur exerce une poussée axiale sur l'outil, car cette poussée est entièrement absorbée par le roulement central 15, dont la bague extérieure 72 est épaulée par l'extrémité d'un élément tubulaire 73 du corps 4, vissé dans l'extrémité arrière du fourreau 16.

La construction décrite ci-dessus offre les mêmes avantages qu'une construction classique à quatre paliers du point de vue de l'absorption des charges axiales, mais elle est notablement plus courte et permet donc de réduire sensiblement la longueur totale de la pièce à main. Cette réduction de longueur a le grand avantage d'augmenter la précision de manipulation par l'opérateur, notamment en réduisant l'effet des efforts que le câble 5 exerce sur l'extrémité arrière de l'instrument.

Un autre avantage notable est que, puisque les extrémités adjacentes des deux arbres 11 et 12 sont supportées et centrées par la même bague 62, leur concentricité est assurée sans aucune mesure additionnelle.

La figure 9 représente un deuxième mode de réalisation du mécanisme de serrage 17, qui permet des simplifications notables par rapport au premier mode de réalisation de la pièce à main. Le mécanisme 17 se distingue de celui décrit plus haut principalement par l'agencement représenté à la figure 9 et par la suppression du ressort central 42 représenté à la figure 2a. Le mécanisme de desserrage 18 sert alors de moyen de commande pour le serrage et le desserrage. Pour qu'il puisse être maintenu par encliquetage aussi bien en position de desserrage qu'en position de serrage, la fente 55 représentée dans la figure 6 peut être équipée d'une languette flexible 58 à chacune de ses extrémités.

Dans la figure 9, on voit que l'extrémité avant du manchon 40 est modifiée simplement par adjonction d'une gorge annulaire 80 à profil en arc de cercle, cette gorge étant séparée de la surface conique 44 par une brève portion de surface cylindrique qui forme une saillie radiale 81 par rapport aux surfaces voisines. Dans ce cas, chaque levier 26 de la pince 10 est de préférence légèrement flexible, ce qui permet au mécanisme de serrage 17 de fonctionner de la manière suivante.

La figure 9 représente la position de desserrage, dans laquelle chaque bille 45 peut aller jusqu'au fond de la gorge 43, de sorte que chaque levier 26 de la pince 10 peut s'écarter jusqu'à s'appliquer contre la surface intérieure de l'arbre creux 11. Les mors 20 de la pince 10 sont alors écartés au maximum et l'on peut introduire ou retirer la queue 3 de l'outil.

Pour serrer ensuite la pince 10, on fait reculer le manchon 40 par rotation du manchon de commande 6 comme dans l'exemple précédent, mais le déplacement axial du manchon 40 est plus grand, car il s'effectue jusqu'à ce que la rainure 80 se place sur les billes 45. Pour que le manchon 40 soit entraîné vers l'arrière par la bague 52 visible dans la figure 2a, on peut lui fixer une bague de butée amovible 79 (représentée en tirets dans le dessin) autour de son extrémité arrière. Dans un premier temps, le passage de la surface conique 44 sur les billes 45 pousse les leviers 26 vers le centre et les fait fléchir lorsque les mors de la pince rencontrent une résistance suffisante sur la queue de l'outil. Grâce à cette flexion, la saillie cylindrique 81 peut passer par-dessus les billes, puis la gorge 80 va s'encliqueter sur les billes et maintenir en place le manchon coulissant 40 uniquement grâce à la force d'appui des leviers 26 sur les billes 45.

Le desserrage s'effectue sensiblement de la même manière que dans le premier mode de réalisation, par une rotation du manchon de commande 6 (figure 2a) qui fait avancer la bague 53 et le manchon jusqu'à la position représentée en figure 9.

La possibilité de supprimer le ressort central 42 représenté à la figure 2 offre des avantages assez importants. D'une part, l'équilibrage de la partie tournante est meilleur, car un tel ressort ne peut jamais être parfaitement centré dans l'alésage qui le contient. Le gain de poids y contribue également. D'autre part, la suppression de ce ressort permet de réduire les forces axiales que le mécanisme de desserrage 18 exerce en direction de l'avant sur le manchon coulissant 40 et, par conséquent, sur l'arbre creux 11. Or ces forces doivent passer ensuite dans les roulements supportant cet arbre, en particulier dans le roulement avant 14 qui est aussi petit que possible et ne devrait pas être soumis à une force axiale trop élevée. Avec l'agencement selon la figure 9, la force axiale maximale impartie à l'arbre 11 lors du desserrage est la force nécessaire pour faire sortir les billes 45 de la gorge 80. Sa valeur peut être prédéterminée aisément par le profil qu'on donne à cette gorge.

Dans la figure 9, on note qu'une collerette 82, ou une série de becs équivalents, est prévue au bord intérieur du trou cylindrique 78 contenant la bille 45, afin de retenir celle-ci lorsque la pince 10 est enlevée. Comme cette collerette n'est pas facile à réaliser, on peut la remplacer par un léger empiétement du canon arrière 24 sur le débouché du trou 78, en raccourcissant légèrement les branches 26 de la pince.

On remarque que le mécanisme de serrage 17 décrit plus haut, que ce soit dans la réalisation selon la figure 2a ou celle de la figure 9, agit seulement sur des surfaces périphériques de la pince 10 et pas sur son extrémité. Ceci rend possible diverses variantes de configuration de pince à effet de levier selon les principes exposés ici.

Si l'on considère la figure 2a, une de ces variantes consiste à reculer (vers la droite dans le dessin) le canon de guidage avant 24 et à l'incorporer à la pince 10, les deux extrémités des leviers 26 étant alors rattachées respectivement au canon avant 22 et au canon arrière 24, les leviers étant en outre assez minces pour fléchir radialement entre les canons sous l'action des billes 45. Celles-ci agiraient sur des surfaces d'appui situées sensiblement à mi-longueur des leviers. Les mors 20 pourraient ainsi être situés à la fois près du canon avant 22 et près du canon arrière 24, garantissant ainsi une tenue sans jeu de la queue de l'outil en deux points axialement éloignés.

Une autre variante, dans le même esprit, consisterait à installer dans l'arbre 11 deux pinces telles que la pince 10, disposées tête-bêche et ayant des leviers plus étroits et espacés de façon à pouvoir se placer entre les leviers de l'autre pince sans les toucher. Les mors d'une des pinces se trouveraient à l'avant tandis que ceux de l'autre pince seraient plus en arrière, assurant ainsi une tenue sans jeu de la queue de l'outil en deux points axialement éloignés. Le mécanisme de serrage pourrait comporter deux groupes de billes 45 et éventuellement deux gorges 43 décalées axialement dans le manchon coulissant 40, pour agir sur les pinces respectives.

Bien que les exemples décrits ci-dessus comportent uniquement des pinces à leviers, il va de soi que les applications de l'invention s'étendent aussi à des instruments à main dont les pinces ou mandrins de serrage ont des branches qui ne sont pas des leviers, dans la mesure où le mécanisme de serrage doit avant tout appliquer une force centripète à chacune de ces branches.

## Revendications

1. Pièce à main à usage dentaire ou chirurgical, comportant :
- un arbre creux (11) rotatif autour d'un axe longitudinal et monté par des roulements dans un fourreau tubulaire fixe (16),
- une pince (10) montée dans une extrémité avant de l'arbre creux et ayant un canal central (19) destiné à recevoir la queue (3) d'un outil amovible, la pince comportant des branches axiales réparties autour de l'axe et pourvues chacune d'un mors (20) dans le canal central,
- un mécanisme de serrage (17) porté par l'arbre creux (11) et agencé pour exercer une force centripète sur une surface d'appui (46) de chaque branche de la pince pour serrer la queue de l'outil entre les mors de la pince, et
- un mécanisme de desserrage (18) porté au moins en partie par le fourreau fixe (16) et agencé pour agir sur le mécanisme de serrage (17) au moins de façon à relâcher la pince, ce mécanisme de desserrage comportant une bague coulissante (52) disposée dans le fourreau fixe (16) et actionnée par un organe manuel de commande (6) de telle sorte que celui-ci puisse déplacer axialement la bague coulissante (52) pour entraîner le manchon coulissant (40) du mécanisme de serrage de façon à relâcher la pince (10),
**caractérisée en ce que** le mécanisme de serrage (17) comporte un manchon coulissant (40) monté sur l'arbre creux et, pour chaque branche de la pince, un élément de transmission (45) disposé dans un trou radial de l'arbre creux (11) entre ladite surface d'appui (46) de la branche et une surface de came intérieure du manchon coulissant (40).

2. Pièce à main selon la revendication 1, **caractérisée en ce que** le mécanisme de desserrage (18) comporte la bague coulissante (52) disposée dans le fourreau fixe (16) et pourvue d'une gorge annulaire extérieure (55), une douille rotative (50) disposée autour du fourreau fixe (16), liée à un organe manuel de commande (6) et pourvue de rainures axiales intérieures (56), et un jeu de billes (51) engagées chacune dans l'une desdites rainures axiales (56), dans une fente hélicoïdale (57) du fourreau fixe (16) et dans ladite gorge annulaire (55), de sorte qu'une rotation de la douille rotative (50) dans un sens déterminé déplace axialement la bague coulissante (52) pour entraîner le manchon coulissant (40) du mécanisme de serrage de façon à relâcher la pince (10).

3. Pièce à main selon la revendication 2, **caractérisée en ce que** ladite fente hélicoïdale (57) comporte sur un des ses bords, près de son extrémité où se trouve la bille (51) dans la position Inactive du mécanisme de desserrage, une languette flexible (58) qui retient la bille par encliquetage dans cette position.

4. Pièce à main selon la revendication 3, **caractérisée en ce que** la languette flexible (58) est formée entre ladite fente hélicoïdale (57) et une fente supplémentaire (59) sensiblement parallèle à celle-ci, ladite languette ayant près de son extrémité une bosse (58a) qui réduit localement la largeur de la fente hélicoïdale.

5. Pièce à main selon la revendication 1, **caractérisée en ce que** ladite surface de came comporte une surface inclinée axialement telle qu'une surface conique (44).

6. Pièce à main selon la revendication **5, caractérisée en ce que** ladite surface de came comporte un premier creux (43) pourvu de ladite surface inclinée (44) et en outre un second creux (80) moins profond que le premier et séparé de celui-ci par une partie saillante (81) et **en ce que** les branches (26) de la pince sont élastiques, de sorte que les seconds creux (80) forment un cran qui maintient en place le manchon coulissant (40) quand lesdits éléments de transmission (45) sont engagés dans les seconds creux par l'élasticité des branches de la pince.

7. Pièce à main selon l'une des revendications précédentes, **caractérisée en ce que** lesdits éléments de transmission (45) sont des billes.

8. Pièce à main selon l'une quelconque des revendications 1 à 7. **caractérisée en ce que** ladite surface de came comporte un premier creux (43), pourvu d'une surface inclinée axialement (44), et un second creux (80) moins profond que le premier et séparé de celui-ci par une partie saillante (81), et **en ce que** les branches (26) de la pince sont élastiques, de sorte que les seconds creux (80) forment un cran qui maintient en place le manchon coulissant (40) quand lesdits éléments de transmission (45) sont engagés dans les seconds creux par l'élasticité des branches de la pince.

9. Pièce à main selon la revendication 6 ou 8. **caractérisée en ce que** le manchon coulissant (40) n'est pas sollicité par un ressort, le mécanisme de desserrage (18) étant agencé pour le déplacer en direction axiale dans les deux sens, respectivement pour serrer et desserrer la pince.

10. Pièce à main selon la revendication 8, **caractérisée en ce que** lesdits éléments de transmission (45) sont des billes.

11. Pièce à main selon l'une quelconque des revendications 1 a 10, **caractérisée en ce que** chaque branche de la pince comprend un levier (26) dont une première extrémité est rattachée une partie annulaire (22) de la pince par une articulation (27) et dont ladite surface d'appui (46) est distante axialement de cette articulation, le mors (20) étant situé axialement plus près de l'articulation (27) que de la surface d'appui (46).

12. Pièce à main selon la revendication 11, **caractérisée en ce que** la partie annulaire (22) et les leviers (26) de la pince sont faits d'une seule pièce, ladite articulation (27) de chaque levier étant une articulation élastique, et ladite partie annulaire (22) comprenant un canon de guidage de la queue d'outil.

## Claims

1. Handpiece for dental or surgical use, including:
- a hollow shaft (11) rotating about a longitudinal axis and mounted via bearings in a fixed tubular shaft (16),
- a collet (10) mounted in a front end of the hollow shaft and having a central channel (19) for receiving the shank (3) of a removable tool, the collet including axial arms distributed around the axis and each provided with a jaw (20) in the central channel,
- a gripping mechanism (17) carried by the hollow shaft (11) and arranged for exerting a centripetal force on a support surface (46) of each arm of the collet to grip the tool shank between the jaws of the collet, and
- a releasing mechanism (18) carried at least in part by a fixed tubular shaft (16) and arranged for acting on the gripping mechanism (17) at least so as to release the collet, said releasing mechanism (18) including a sliding collar (52) arranged in the fixed tubular shaft (16) and actuated by a manual control member (6) such that the latter can move the sliding collar (52) axially to drive the sliding sleeve (40) of the gripping mechanism so as to release the collet (10),
**characterized in that** the gripping mechanism (17) includes a sliding sleeve (40) mounted on the hollow shaft and, for each arm of the collet, a transmission element (45) arranged in a radial hole of the hollow shaft (11) between said support surface (46) of the arm and an inner cam surface of the sliding sleeve (40).

2. Handpiece according to claim 1, **characterized in that** the releasing mechanism (18) includes a sliding collar (52) arranged in the fixed tubular shaft (16) and provided with an external annular groove (55), a rotating bush (50) arranged around the fixed tubular shaft (16), connected to a manual control member (6) and provided with inner axial grooves (56), and a set of balls (51) each engaged in one of said axial grooves (56), in a helical slot (57) of the fixed tubular shaft (16) and in said annular groove (55), such that rotating the rotating bush (50) in a determined direction moves the sliding collar (52) axially to drive the sliding sleeve (40) of the gripping mechanism so as to release the collet (10).

3. Handpiece according to claim 2, **characterized in that** said helical slot (57) includes on one of its edges, close to the end thereof where the ball (51) is located when the releasing mechanism is in the inactive position, a flexible strip (58) which retains the ball in this position via a snap fit.

4. Handpiece according to claim 3, **characterized in that** the flexible strip (58) is formed between said helical slot (57) and an additional slot (59) substantially parallel thereto, said strip having, close to the end thereof, a raised portion (56a) which reduces the width of the helical slot locally.

5. Handpiece according to claim 1, **characterized in that** said cam surface includes an axially inclined surface such as a conical surface (44).

6. Handpiece according to claim 5, **characterized in that** said cam surface includes a first hollow (43) provided with said inclined surface (44) and also a second hollow (48) that is shallower than the first and separated therefrom by a projecting part (81) and **in that** the arms (26) of the collet are resilient, such that the second hollows (80) form a notch which holds the sliding sleeve (40) in place when said transmission elements (45) are engaged in the second hollows by the resilience of the collet arms.

7. Handpiece according to any of the preceding claims, **characterized in that** said transmission elements (45) are balls.

8. Handpiece according to any one of claims 1 to 7, **characterized in that** said cam surface includes a first hollow (43) provided with an inclined surface (44), and a second hollow (80) that is shallower than the first and separated therefrom by a projecting part (81), and **in that** the arms (26) of the collet are resilient, such that the second hollows (80) form a notch which holds the sliding sleeve (40) in place when said transmission elements (45) are engaged in the second hollows by the resilience of the collet arms.

9. Handpiece according to claim 6 or 8, **characterized in that** the sliding sleeve (40) is not biased by a spring, the releasing mechanism (18) being arranged for moving it axially in both directions, respectively for gripping and releasing the collet.

10. Handpiece according to claim 8, **characterized in that** said transmission elements (45) are balls.

11. Handpiece according to any one of claims 1 to 10, **characterized in that** each arm of the collet includes a lever (26), a first end of which is attached to an annular part (22) of the collet by a hinge (27) and whose said support surface (46) is axially distant from said hinge, the jaw (20) being located closer axially to the hinge (27) than to the support surface (46).

12. Handpiece according to claim 11, **characterized in that** the annular part (22) and the levers (26) of the collet are made in a single piece, said hinge (27) of each lever being a resilient hinge and said annular part (22) including a guide barrel for the tool shank.

## Patentansprüche

1. Handteil für zahnärztliche oder chirurgische Nutzung, mit:
- einer Hohlwelle (11), die um eine Längsachse drehbar ist und über Wälzlager in einer festen röhrenförmigen Hülse (16) angebracht ist,
- einer Zange (10), die in einem vorderen Ende der Hohlwelle angebracht ist und einen Mittelkanal (19) besitzt, der dazu bestimmt ist, das hintere Ende (3) eines entnehmbaren Werkzeugs aufzunehmen, wobei die Zange axiale Schenkel aufweist, die um die Achse verteilt sind und jeweils mit einer Backe (20) in dem Mittelkanal versehen sind,
- einem Klemmmechanismus (17), der von der Hohlwelle (11) getragen wird und ausgelegt ist, um auf eine Abstützoberfläche (46) jedes Schenkels der Zange eine Zentripetalkraft auszuüben, um das hintere Ende des Werkzeugs zwischen den Backen der Zange einzuklemmen, und
- einem Klemmlösemechanismus (18), der wenigstens teilweise von der festen Hülse (16) getragen wird und ausgelegt ist, um auf den Klemmmechanismus (17) wenigstens in der Weise einzuwirken, dass die Zange freigegeben wird, wobei dieser Klemmlösemechanismus einen Gleitring (52) aufweist, der in der festen Hülse (16) angeordnet ist und durch ein Handsteuerorgan (6) in der Weise betätigt wird, dass dieses den Gleitring (52) axial verlagern kann, um die Gleitmuffe (40) des Klemmmechanismus mitzunehmen, um die Zange (10) freizugeben,
**dadurch gekennzeichnet, dass** der Klemmmechanismus (17) eine Gleitmuffe (40), die an der Hohlwelle angebracht ist, und für jeden Schenkel der Zange ein Übertragungselement (45), das in einem radialen Loch der Hohlwelle (11) zwischen der Abstützoberfläche (46) des Schenkels und einer inneren Nockenoberfläche der Gleitmuffe (40) angeordnet ist, umfasst.

2. Handteil nach Anspruch 1, **dadurch gekennzeichnet, dass** der Klemmlösemechanismus (18) den Gleitring (52) aufweist, der in der festen Hülse (16) angeordnet ist und versehen ist mit einer äußeren Ringnut (55), einer drehbaren Buchse (50), die um die feste Hülse (16) angeordnet ist, mit einem Handsteuerorgan (6) verbunden ist und mit axialen Innennuten (56) versehen ist, und mit einem Satz von Kugeln (51), die jeweils in einer der axialen Nuten (56), in einem schraubenlinienförmigen Schlitz (57) der festen Hülse (16) und in der ringförmigen Nut (55) in Eingriff sind, derart, dass eine Drehung der drehbaren Buchse (50) in einer bestimmten Richtung den Gleitring (52) axial verlagert, um die Gleitmuffe (40) des Klemmmechanismus in der Weise mitzunehmen, dass die Zange (10) freigegeben wird.

3. Handteil nach Anspruch 2, **dadurch gekennzeichnet, dass** der schraubenlinienftirmige Schlitz (57) an einem seiner Ränder in der Nähe seines Endes, an dem sich die Kugel (51) in der inaktiven Position des Klemmlösemechanismus befindet, eine flexible Zunge (58) aufweist, die die Kugel durch Einrasten in dieser Position hält.

4. Handteil nach Anspruch 3, **dadurch gekennzeichnet, dass** die flexible Zunge (58) zwischen dem schraubenlinienförmigen Schlitz (57) und einem zu diesem im Wesentlichen parallelen zusätzlichen Schlitz (59) ausgebildet ist, wobei die Zunge in der Nähe ihres Endes einen Höcker (58a) besitzt, der die Weite des schraubenlinienförmigen Schlitzes lokal verringert.

5. Handteil nach Anspruch 1, **dadurch gekennzeichnet, dass** die Nockenoberfläche eine axial geneigte Oberfläche wie etwa eine konische Oberfläche (44) aufweist.

6. Handteil nach Anspruch 5, **dadurch gekennzeichnet, dass** die Nockenoberfläche einen ersten Hohlraum (43), der mit der geneigten Oberfläche (44) versehen ist, und außerdem einen zweiten Hohlraum (80), der weniger tief ist als der erste und von diesem durch ein vorstehendes Teil (81) getrennt ist, umfasst und dass die Schenkel (26) der Zange elastisch sind, derart, dass die zweiten Hohlräume (80) einen Einschnitt bilden, der die Gleitmuffe (40) an ihrem Ort hält, wenn die Übertragungselemente (45) in den zweiten Hohlräumen durch die Elastizität der Schenkel der Zange in Eingriff sind.

7. Handteil nach einem der vorhergehenden Ansprüche, **dadurch gekennzeichnet, dass** die Übertragungselemente (45) Kugeln sind.

8. Handteil nach einem der Ansprüche 1 bis 7, **dadurch gekennzeichnet, dass** die Nockenoberfläche einen ersten Hohlraum (43), der mit einer axial geneigten Oberfläche (44) versehen ist, und einen zweiten Hohlraum (80), der weniger tief ist als der erste und von diesem durch ein vorstehendes Teil (81) getrennt ist, umfasst und dass die Schenkel (26) der Zange elastisch sind, derart, dass die zweiten Hohlräume (80) einen Einschnitt bilden, der die Gleitmuffe (40) an ihrem Ort hält, wenn die Übertragungselemente (45) in den zweiten Hohlräumen durch die Elastizität der Schenkel der Zange in Eingriff sind.

9. Handteil nach Anspruch 6 oder 8, **dadurch gekennzeichnet, dass** die Gleitmuffe (40) nicht durch eine Feder vorbelastet ist, wobei der Klemmlösemechanismus (18) ausgelegt ist, um sie in axialer Richtung in beiden Richtungssinnen zu verlagern, um die Zange einzuklemmen bzw. freizugeben.

10. Handteil nach Anspruch 8, **dadurch gekennzeichnet, dass** die Übertragungselemente (45) Kugeln sind.

11. Handteil nach einem der Ansprüche 1 bis 10, **dadurch gekennzeichnet, dass** jeder Schenkel der Zange einen Hebel (26) aufweist, wovon ein erstes Ende an einem ringförmigen Teil (22) der Zange durch ein Gelenk (27) angefügt ist und wovon die Abstützoberfläche (46) von diesem Gelenk axial beabstandet ist, wobei sich die Backe (20) axial näher bei dem Gelenk (27) als bei der Abstützoberfläche (46) befindet.

12. Handteil nach Anspruch 11, **dadurch gekennzeichnet, dass** der ringförmige Teil (22) und die Hebel (26) der Zange einteilig ausgebildet sind, wobei das Gelenk (27) jedes Hebels ein elastisches Gelenk ist und der ringförmige Teil (22) einen Führungslauf für das hintere Ende des Werkzeugs aufweist.
